# EUROPEAN PATENT APPLICATION

(11) **EP 0 652 223 A1**
(43) Date of publication of application: **10.05.1995**
(21) Application number: 94117529.1
(22) Date of filing: 07.11.1994
(51) Int. Cl.: C07F 7/30, C08G 79/00, A61K 31/28

(54) **3-Oxygermylpropionic acid polymer**

(30) Priority: 09.11.1993 JP 279370/93; 30.12.1993 JP 353577/93; 03.02.1994 JP 11516/94; 28.02.1994 JP 28727/94; 02.08.1994 JP 181111/94
(71) Applicant: SANWA KAGAKU KENKYUSHO CO., LTD., Higashi-ku Nagoya-shi Aichi-ken (JP)
(72) Inventor: Sawai, Kiichi, c/o Sanwa Kagaku, Higashi-ku, Nagoya-shi, Aichi (JP); Mitani, Takahiko, c/o Sanwa Kagaku, Higashi-ku, Nagoya-shi, Aichi (JP); Ninomiya, Naohisa, c/o Sanwa Kagaku, Higashi-ku, Nagoya-shi, Aichi (JP); Ishiwata, Yoshirou, c/o Sanwa Kagaku, Higashi-ku, Nagoya-shi, Aichi (JP)
(74) Representative: Kraus, Walter, Dr.

(57) **Abstract**

An eight-structural polymer of 3-oxygermylpropionic acid having a minimum constitutional unit of (O_{1/2})₃GeCH₂CH₂COOH, an empirical formula of C₆H₁₀Ge₂O₇, and the following stereostructure: 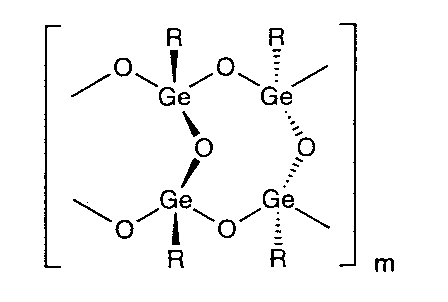
wherein R stands for -CH₂CH₂COOH and m is a weight average polymerization degree calculated on the basis of the weight average molecular weight of propagermanium propyl ester and is 137 ± 84 (137 on average with a standard deviation of ± 3σ); and a pharmaceutical composition comprising the same. The pharmaceutical composition is useful for preventing and treating immune diseases and as an interferon enhancer, a Maillard reaction inhibitor, and an adjuvant for vaccines.

## Description

### FIELD OF THE INVENTION

This invention relates to an eight-structural polymer of 3-oxygermylpropionic acid represented by the following stereostructure: 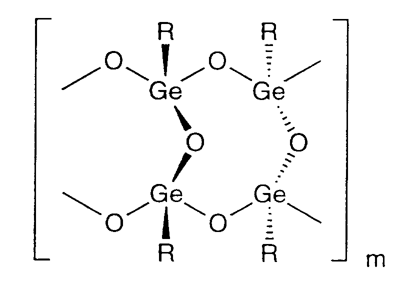
wherein R represents -CH₂CH₂COOH, and m is a weight average polymerization degree calculated on the basis of the weight average molecular weight of propagermanium propyl ester and is 137 ± 84 (137 on average with a standard deviation of ± 3σ); and relates to a drug for preventing, ameliorating, and treating symptoms of immune diseases, in particular, hepatic disorders such as Type B hepatitis and Type C hepatitis, wart and AIDS caused by viruses, an interferon enhancer to be used in the interferon therapy, a Maillard reaction inhibitor, a drug for preventing and treating diabetes and concurrent diseases thereof caused by Maillard reaction, and an adjuvant for vaccines which comprises the above-mentioned compound as the major ingredient.

### BACKGROUND OF THE INVENTION

Since 3-oxygermylpropionic acid undergoes polymerization in a complicated manner and is useful for various applications, it has attracted attention of many researchers from the viewpoints of pharmacological activities in recent years. JP-B-57-53800 discloses antiviral activities etc. of this compound (The term "JP-B" as used herein means an "examined Japanese patent publication".). Further, it was reported that carboxyethylgermanium sesquioxide, which has been known for a long time and generally called Ge132, has a twelve-membered ring structure (J. Am. Chem. Soc., vol. 98(25), pp. 8287 (1976)).

However, these compounds have some disadvantages. Namely, it is difficult to synthesize these compounds with good reproducibility and thus the pharmacological activities thereof vary from lot to lot. In addition, these compounds are poor in keeping qualities and thus suffer from a decrease in the activities during dispensing, etc.

The present inventors have conducted extensive studies on preparation methods whereby the inherent pharmacological activities of 3-oxygermylpropionic acid can be sustained in a stable state. They have further studied the action mechanism of this compound after the incorporation *in vivo*. As a result, they have successfully found out various substances which serve as a stabilizer for 3-oxygermylpropionic acid (JP-A-61-65819) and also found that sugars serve to enhance the pharmacological activities thereof (JP-A-60-190714) (The term "JP-A" as used herein means an "unexamined published Japanese patent application".).

The structure of carboxyethylgermanium sesquioxide has already been determined (J. Am. Chem. Soc., vol. 98(25), pp. 8287 (1976)). JP-B-57-53800 suggests the possibility of the existence of various 3-oxygermylpropionic acid compounds. However, these substances each suffers from the above-mentioned problems.

### SUMMARY OF THE INVENTION

The present inventors have conducted extensive studies on a number of known compounds including those described in JP-B-57-53800 in order to solve the problems in the activities of 3-oxygermylpropionic acid which are caused by differences in the synthetic operations and physicochemical procedures. As a result, they have proved the existence of a compound having various stereostructures. Then, they have screened the pharmacological effects thereof depending on the stereostructure. Thus, they have found out that a compound, which has been considered to be represented by [(O_{1/2})₃GeCH₂CH₂COOH]ₙ, has a number of stereostructures (s-type, w-type, and c-type as shown below) and its activity varies depending on the degree of polymerization. 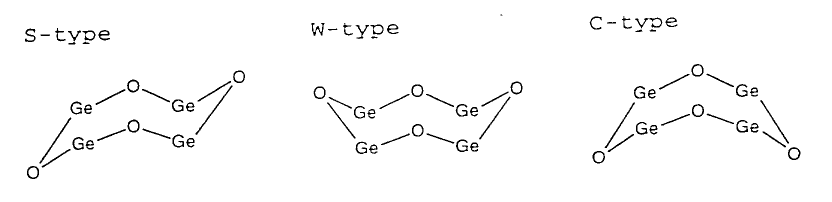
Then, they have specified a structure and a weight average polymerization degree whereby the highest activity can be attained from among these compounds.

### BRIEF DESCRIPTION OF THE DRAWINGS

Fig. 1 shows the general the evaluation of the amelioration in liver function (Fig. 1-1), safety (Fig. 1-2) and usefulness (Fig. 1-3) evaluated by the physician in charge.

Fig. 2 shows a change in GOT with the lapse of time in a biochemical examination.

Fig. 3 shows a change in GPT with the lapse of time in a biochemical examination.

Fig. 4 shows a change in γ-GPT with the lapse of time in a biochemical examination.

Fig. 5 shows a change in P-III-P with the lapse of time in a biochemical examination.

Fig. 6 shows a change in prolyl hydroxylase (PH) level with the lapse of time in a biochemical examination.

Fig. 7 shows a change in helper/inducer T cells in peripheral blood with the lapse of time.

Fig. 8 shows a change in suppressor/cytotoxic T cells in peripheral blood with the lapse of time.

Fig. 9 shows a change in natural killer activity in peripheral blood with the lapse of time.

Fig. 10 shows the inhibiting effect of the invention compound on the production of the Maillard reaction product in the collagenous tissue in ischiadic nerve.

### DETAILED DESCRIPTION OF THE INVENTION

The chemical and physical properties of the compound according to the present invention are as summarized in Tables 1 and 2 below.

In these Tables, the compound of the present invention is referred to as 8-structural SK818. Table 1 shows the results of the molecular weight measurement by the light scattering method. Table 2 shows the lattice constant determined by the powder X-ray diffraction method. For the measurement of the molecular weight, the light-structural polymer of 3-oxygermylpropionic acid was converted to its propyl ester by using diazopropane, and the molecular weight of the propyl ester was measured by the light scattering method (the Zimm plot analysis). Then, the equivalent molecular weight of the eight-structural polymer of 3-oxygermylpropionic acid was calculated. Table 3 gives the data on the comparison in physical properties with a known germanium compound (12-membered Ge132). The data were obtained by the conventional methods (cf. Japanese Pharmacopeia twelfth revision).

**TABLE 1**

| (Weight-average molecular weight of SK-818) | | |
|---|---|---|
| Weight average molecular weight ($\overline{\text{Mw}}$) | SK-818 propyl ester | SK-818 (equivalent value) |
| Average ($\overline{\text{X}}$) | 1.16 × 10⁵ | 9.29 × 10⁴ |
| Standard deviation (3σ) | ± 0.71 × 10⁵ | ± 5.72 × 10⁴ |
| Molecular formula* | (C₆H₁₁GeO_{3.5})ₙ | (C₃H₅GeO_{3.5})ₙ |
| Weight average polymerization degree (n)* | 548 ± 337 | 137 ± 84 |

| | | |
|---|---|---|
| *: n is an integer determined provided that the minimum constitutional unit of SK-818 is (O_{1/2})₃GeCH₂CH₂COOH. | | |

**TABLE 2**

| | |
|---|---|
| Chemical formula*¹ | C₃H₅GeO_{3.5} |
| Formula weight*¹ | 169.66 |
| Crystal class | monoclinic |
| Space group | - - - - - |

| Unit cell parameters | |
|---|---|
| a (Å) | 13.35 (1) |
| b (Å) | 5.03 (1) |
| c (Å) | 7.55 (2) |
| β (deg.) | 94.3 (2) |
| vol (Å³) | 505.4*² |
| z | 4*³ |
| Density (gcm⁻¹) | 2.23*⁴ |

| | |
|---|---|
| *1: Indication is given provided that the minimum constitutional unit of SK-818 is (O_{1/2})₃ GeCH₂CH₂COOH. | |
| *2: Calculated on the basis of the lattice constant. | |
| *3: Calculated on the basis of the lattice constant and the measured density. | |
| *4: Measured by the floating method (cf. Shinjikkenkagakukoza, No. 17, pp. 551 - 552.). | |

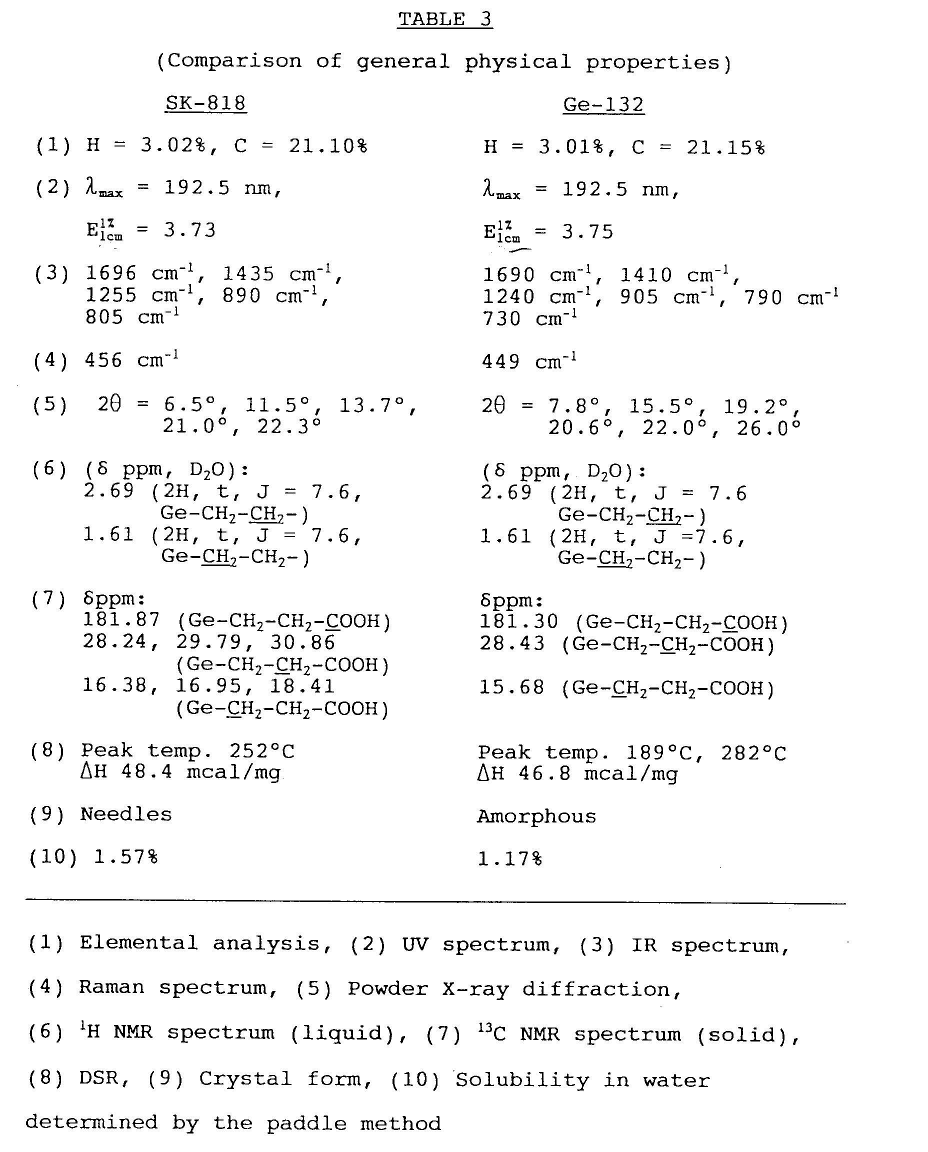

The eight-structural polymer of 3-oxygermylpropionic acid can be prepared, for example, as follows. That is, one mole portion of 3-trichlorogernylpropionic acid is dissolved in 1 to 2 liters of a non-toxic solvent which dissolves in water (e.g., acetone, acetonitrile, dioxane, and dimethyl formamide), and 1 to 2 liters of water is gradually added to the resulting solution, followed by crystallization. When acetone or the like is used as a solvent, water is added preferably at a temperature of from 0 to 20°C. Then, the resulting crystals are removed by filtration and subjected to drying.

When 3-oxygermylpropionic acid according to the present invention is administered to humans in practice, it is preferably used in the form of an activator composition containing from 0.005 to 5% by weight of the compound of the present invention together with 0.005 to 50% by weight of a carrier for stabilizing the pharmacological activity thereof, and a vehicle. The pharmaceutical composition of the present invention is particularly effective in preventing and treating symptoms of immune diseases, in particular, hepatic disorders such as Type B hepatitis and Type C hepatitis, wart and AIDS; in reducing the dose of interferon to be used in interferon therapy; in preventing and treating diabetes and concurrent diseases thereof caused by Maillard reaction; and as an adjuvant for vaccines.

As the carrier for stabilizing the pharmacological activity, sugars such as lactose, sucrose and dextrans, modified celluloses such as hydroxypropylcellulose and naturally occurring polymers such as albumin may be used. Illustrative examples of the vehicle include hydroxypropylmethylcellulose, polyvinylpyrrolidone, gelatin, lactose, and hydroxypropylcellulose. If desired, the composition may additionally contain a drug which has a high direct therapeutic effect and is generally employed for the aforementioned diseases. Illustrative examples of suitable drugs include antiviral agents for viral hepatitis, antiallergic agents for allergic diseases and anticancerous agents for cancer. By using such a drug in combination with the compound of the present invention, the toxicity of the drug may be relieved while maintaining the curative activities high.

### (Administration form and dose)

The 3-oxygermylpropionic acid according to the present invention may be employed in any usual administration form. Depending upon the type of the drug, the pharmaceutical composition may be formulated into an enteral form. The 3-oxygermylpropionic acid of the present invention is generally administered to humans at a dose of 1 to 1,500 mg/day, though the dose may vary depending upon the type or form of the preparation, the age of patients, etc. In the case of adults (weighing 50 kg), for example, the dose is preferably 150 mg/day.

The following Preparation Examples, Efficacy and Pharmacology Test Examples and Formulation Examples will further illustrate the present invention in greater detail.

### PREPARATION EXAMPLE

A 252 g (1 mol) portion of 3-trichlorogermylpropionic acid was dissolved in 2 liters of acetone. Then, 1.5 l of water was added to the resulting solution spending several hours while maintaining the temperature at 10 to 20°C. After allowing the resulting mixture to stand day and night, the crystals thus precipitated were filtered under suction, washed with acetone and dried under reduced pressure. Thus, 3-oxygermylpropionic acid polymer was obtained with a yield of 90%.

A minimum constitutional unit: (O_{1/2})₃GeCH₂CH₂COOH
An empirical formula: C₆H₁₀Ge₂O₇,
m.p.: about 230°C (decomp.)
Property: white crystalline powders with no smell and a slight sourness. Hardly soluble in water and scarcely soluble in ethanol, acetone, ether, dichloromethane and hexane
The molecular weight and the lattice constant of the compound of the present invention thus obtained were determined respectively by the light scattering method and the powder X-ray diffraction method. Tables 1 and 2 show the results.

### PREPARATION OF COMPOSITION EXAMPLE

With the use of ethanol (90 g) as a wetting agent, 2 parts of the compound of the present invention (200 g) and 1 part of hydroxypropylcellulose (100 g) were kneaded together. The kneaded blend was then dried at 50°C or below to thereby obtain a powdery or granular composition.

### FORMULATION EXAMPLE 1

### Capsules:

Capsules were prepared in accordance with the following formulation.

| | |
|---|---|
| 3-Oxygermylpropionic acid polymer | 10.0 |
| Magnesium stearate | 1.8 |
| Hydroxypropylcellulose | 2.7 |
| Lactose | q.s. |
| Total | 180.0 mg |

### FORMULATION EXAMPLE 2

### Tablets:

Compressed tablets were prepared in accordance with the following formulation.

| | |
|---|---|
| 3-Oxygermylpropionic acid polymer | 10.0 |
| Magnesium stearate | 1.8 |
| CMC-Na | 8.0 |
| Light anhydrous silicic acid | 2.0 |
| Lactose | q.s. |
| Total | 180.0 mg |

### EFFICACY AND PHARMACOLOGY TEST EXAMPLE 1

### (Comparison in usefulness between the compound of the present invention and a known compound)

### a) Purpose

To compare the effect of the compound of the present invention on the antibody production of tumor bearing mice with that of the known compound carboxygermanium sesquioxide (Ge132).

### b) Procedure

BALB/c mice aged 7 weeks were each subcutaneously implanted with 2 × 10⁶ Sarcoma-180 cells. Nine days after the transplantation, the compound of the present invention or Ge132 was daily administered to the mice at doses of 0.3, 1, 3, 10 and 30 mg/kg/day consecutively for 5 days. On the next day of the final administration, each mouse was sensitized by intravenously injecting 2 × 10⁸ sheep red blood cells (SRBC). Four days after the sensitization, the spleen of each animal was collected to measure the amount of anti-SRBC IgM-PFC in the spleen cells.

### c) Results and Discussion

Table 4 shows the results of the test on the effects of the compound of the present invention and Ge132 on the antibody production. As seen from Table 4, significant effect was observed at doses of 0.3 to 30 mg/kg of the compound of the present invention. The number of PFC reaches the maximum level at doses between 1 to 3 mg/kg.

In contrast, with Ge132, a significant effect was observed only when the dosage is 30 mg/kg.

Thus, it is appreciated that the compound of the present invention is effective in increasing the antibody producing ability of the tumor-bearing mice and its usefulness is about 100 times as high as that of Ge132.

This finding also suggests that the compound of the present invention has an adjuvant activity on vaccines for animals including humans and, therefore, is efficacious as an adjuvant too.

**TABLE 4**

| (Effects of the invention compound and Ge132 on antibody-producing activity of tumor-bearing mice) | | |
|---|---|---|
| | | IgM-PFC/10⁶ spleen cells |
| Normal mice group | | 1613 ± 107 *** |
| Cancer mice group | | 740 ± 40 |
| Invention compound | 0.3 mg/kg | 984 ± 61 ** |
| | 1 | 1269 ± 112 *** |
| | 3 | 1258 ± 82 *** |
| | 10 | 1004 ± 102 * |
| | 30 | 909 ± 64 * |
| Ge132 | 0.3 mg/kg | 770 ± 77 |
| | 3 | 779 ± 63 |
| | 10 | 805 ± 60 |
| | 30 | 995 ± 69 ** |
| IgM-PFC count is an average in 7 mice ± standard deviation. | | |

| | | |
|---|---|---|
| Significant difference from the cancer mice group: * p < 0.05, | | |
| ** p < 0.01, | | |
| *** p < 0.001. | | |

### EFFICACY AND PHARMACOLOGY TEST EXAMPLE 2

### (Preventive and treating effect on wart)

### a) Purpose

To examine the effect of the compound of the present invention on the induction and formation of papilloma caused by Shope papilloma virus (SPV) with the use of Japanese White rabbits.

### b) Procedure

Female Japanese White rabbits weighing 2 to 2.5 kg were used. Each group had 5 animals.

A papilloma tissue homogenate (20% w/v) in a phosphate-buffered saline (pH 7.2) was used as an infectious viral solution. This SPV solution was inoculated on the shaved skin of the rabbits (4 sites par animal) by the scarification method. Each inoculation site was approximately 20 × 20 mm in size. The volume of the papilloma was estimated from the length × width × height. The compound of the present invention was formulated into capsules and administered at doses of 0.3, 1, 3, 10 and 30 mg/kg/day. Administration was made on the day of the inoculation and twice a week for 10 weeks thereafter.

### c) Results and Discussion

Table 5 shows the growth of shope papilloma virus-induced papilloma 5 and 10 weeks after the inoculation with SPV and the suppressing effect of the compound of the present invention. Papilloma volume is an average of 4 sites of each animal.

Five weeks after the inoculation with the virus, the compound of the present invention significantly regresses the growth of papilloma at doses of 1 to 30 mg/kg. Ten weeks after the inoculation, this effect is further enhanced and the regression reaches the maximum level at doses of 1 to 3 mg/kg. In some individuals of the group of 1 mg/kg, in particular, the papilloma was almost retracted.

In addition, the administration of the compound of the present invention in the largest dose (30 mg/kg) causes no body weight loss.

**TABLE 5**

| (Effect of the invention compound on growth of SPV-induced papilloma) | | | |
|---|---|---|---|
| | | Papilloma volume | |
| | | 5 weeks | 10 weeks |
| Control group | | 7.7 ± 0.9 | 13.8 ± 1.5 |
| Present compound | 0.3 mg/kg | 5.5 ± 0.9 | 5.4 ± 0.9 ** |
| | 1 | 3.3 ± 0.5 ** | 2.4 ± 0.5 *** |
| | 3 | 2.1 ± 0.6 *** | 2.8 ± 0.7 *** |
| | 10 | 3.2 ± 0.3 ** | 4.0 ± 0.4 *** |
| | 30 | 4.5 ± 0.9 * | 7.9 ± 1.3 * |
| Each value represents Mean ± S.E. of 7 rabbits | | | |

| | | | |
|---|---|---|---|
| Significant difference from the control group: * p < 0.05, | | | |
| ** p < 0.01, | | | |
| *** p < 0.001. | | | |

### CLINICAL TEST EXAMPLE

### (Treating effect on juvenile flat wart)

### a) Purpose

To examine the usefulness of the compound of the present invention, which is capable of potentiating the immune function of a host, in the treatment of juvenile flat wart caused by human papilloma virus, since immunity participates in the onset and healing of this disease.

### b) Procedure

The compound of the present invention was administered to 20 patients with juvenile flat wart at a dose of 10 mg after each meal 3 times a day. The administration was continued over 12 weeks in principle, though it was ceased when a patient showed the complete retraction of rash. Each patient was diagnosed for the general judgement by the physician in charge.

### c) Results of treatment

Table 6 shows the results of the treatment achieved 12 weeks after starting the administration of the compound of the present invention. The administration of the compound of the present invention achieves a high efficacy. During the administration period, the compound of the present invention shows no remarkable adverse effect.

**TABLE 6**

| (Therapeutic effect of the invention compound on juvenile flat wart) | |
|---|---|
| Cure | 13 cases (65%) |
| Fairly ameliorated | 5 (25%) |
| No change | 1 |
| Exacerbation | 0 |
| Dropout | 1 |

### EFFICACY AND PHARMACOLOGY TEST EXAMPLE 3

### (Treating effect on Type C viral hepatitis)

The formulation prepared in the above Formulation Example 1 was administered to 20 patients (16 male cases and 4 female cases) with Type C viral hepatitis at a dose of 2 capsules after each meal 3 times a day. The administration was continued over 24 weeks in principle and the treating effect was thus examined.

### Results and Discussion

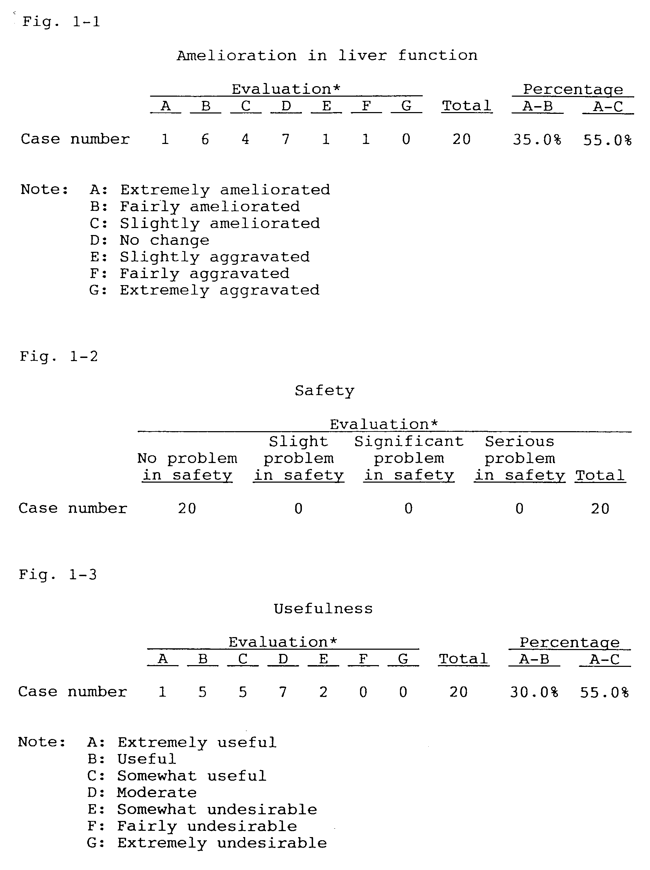

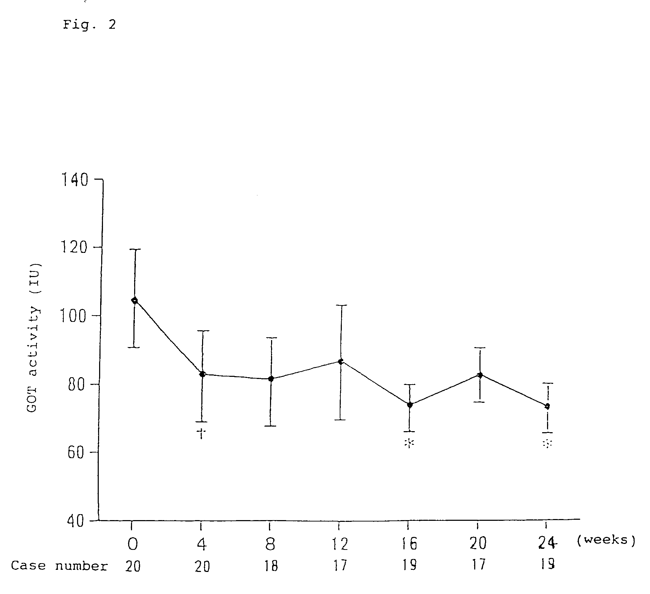

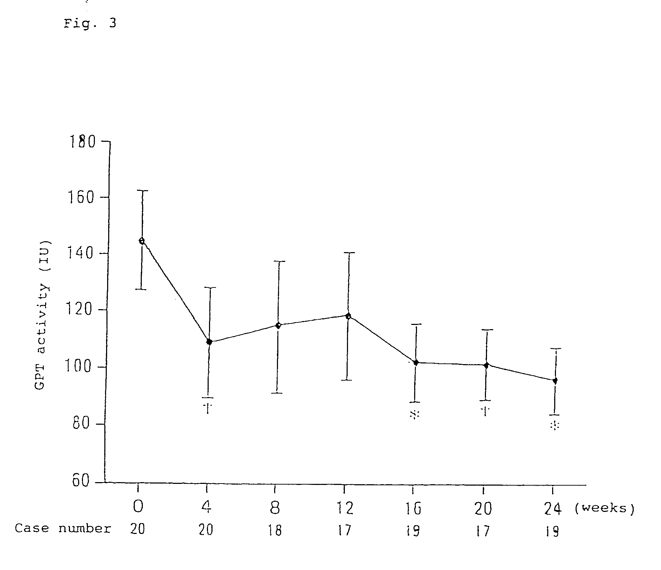

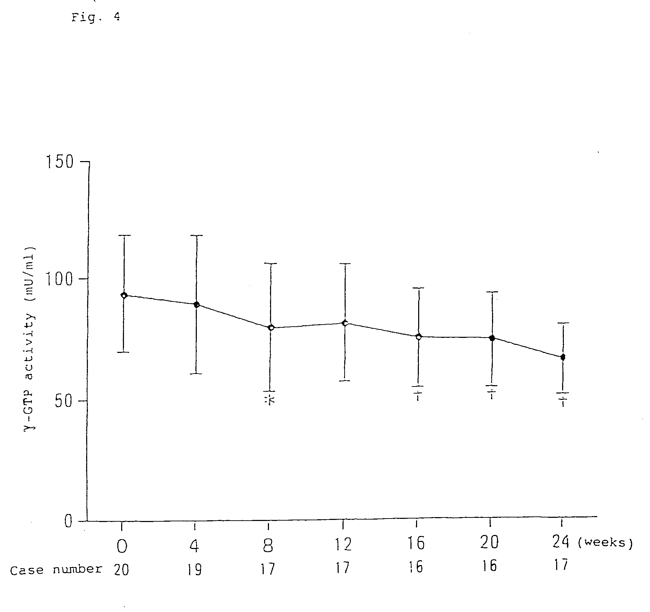

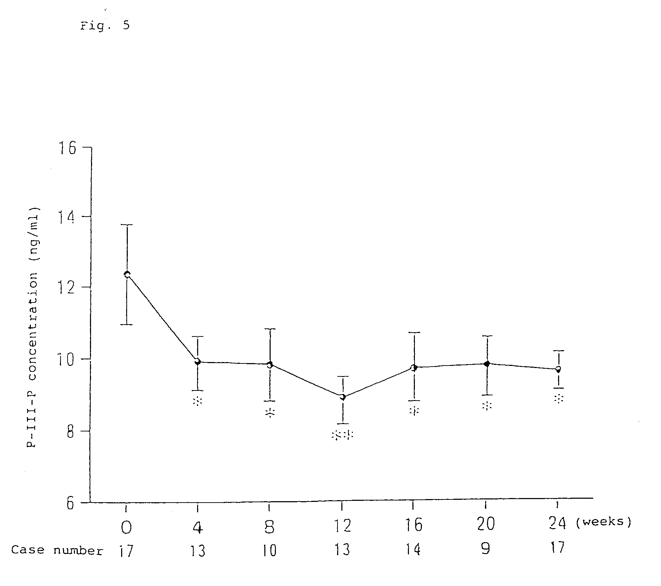

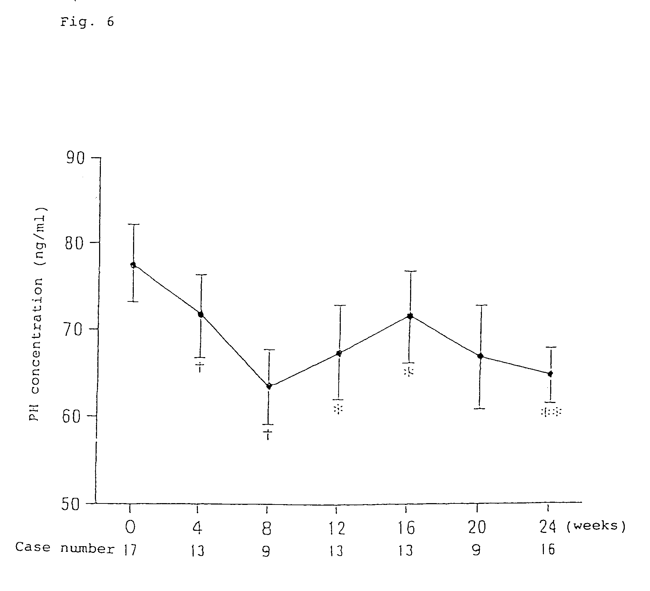

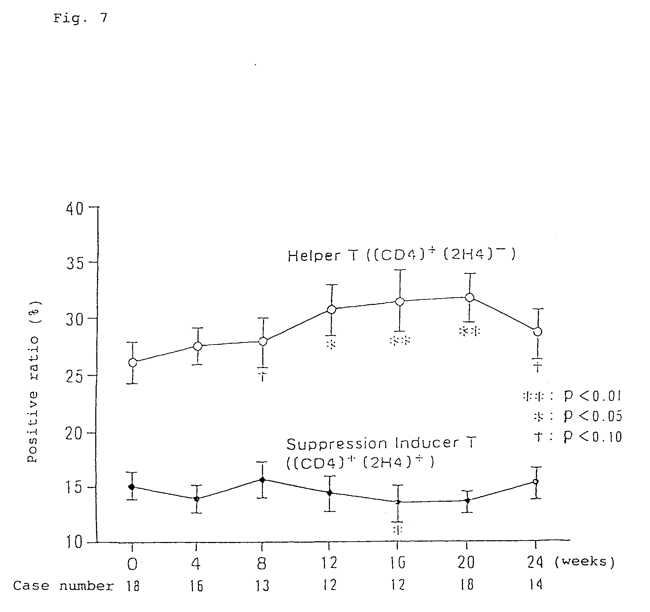

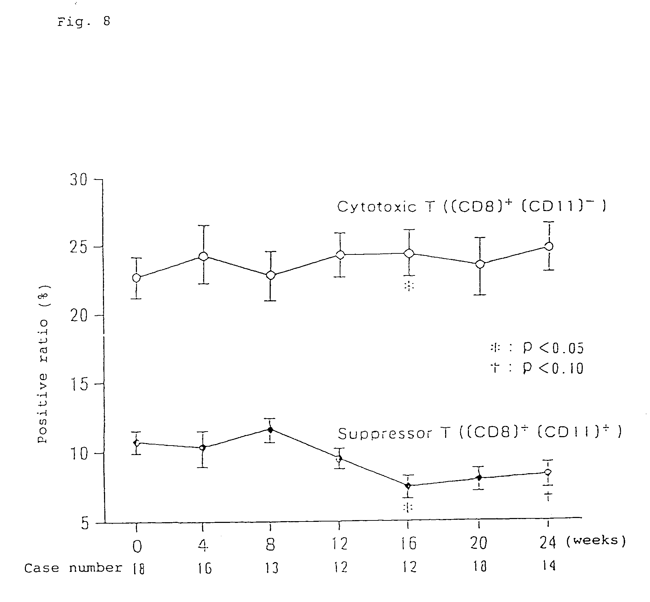

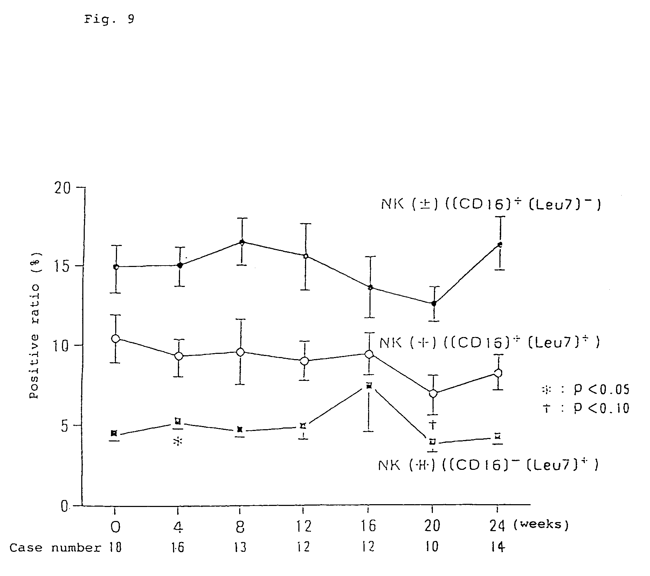

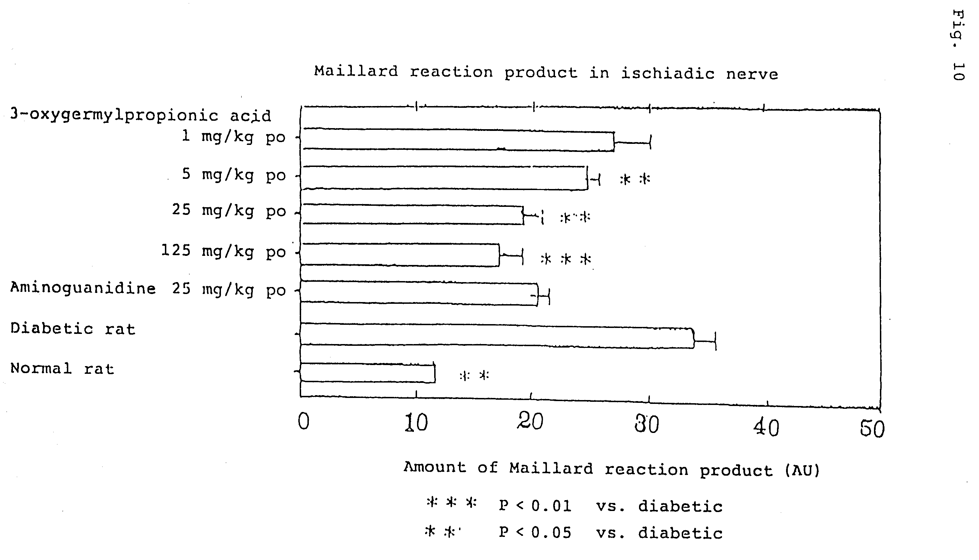

Figs. 1 to 9 show the results. According to the judgement by the physician in charge, the formulation is highly efficacious in the amelioration of hepatic function, the suppression of fibrosis and the amelioration of virus marker.

### EFFICACY AND PHARMACOLOGY TEST EXAMPLE 4

### (Preventive and treating effect on immune disease)

### a) Purpose

To examine the preventive effect of the compound of the present invention on nephritis which is an immune disease.

### b) Procedure

The compound of the present invention was orally administered to male MRL/1 mice at doses of 1, 3, 10 and 30 mg/kg/day once a day over 12 weeks consecutively.

During the administration period, urinary protein was measured once a week, wherein individuals of a urinary protein level exceeding 100 mg/dl were taken as positive. Examination was then made on how many animals became positive at respective week-age. Further, blood-urinary nitrogen levels were determined on the next day of the final administration to make serological/biochemical and pathological estimations on the action of the compound of the present invention on nephritis.

### c) Results and Discussion

As the result of the above-mentioned test, it is proved that the compound of the present invention suppresses the occurrence of symptoms of nephritis, on the basis of the urinary protein levels and blood-urinary nitrogen levels, and that the dosage of 3 mg/kg/day gives the best results. No nephritis inhibiting effect is obtained in the case of indomethacin employed as a comparative.

In the pathological estimation on nephritis, the MRL/1 mice develop major symptoms of membranoproliferative glomerulonephritis. In the control group, 57% of glomeruli became morbid, but only 23 to 24% did in the groups to which the compound of the present invention was given. Namely, the compound of the present invention exerts an obvious effect of suppressing the development of spontaneous nephritis in MRL/1 mice. The group to which indomethacin was given showed no remarkable difference in the extent of morbid glomeruli, which indicates that no suppressive effect is achieved.

As discussed above, the compound of the present invention is efficacious against the development of spontaneous nephritis in MRL/1 mice from the standpoints of serology/biochemistry and pathology. These effects are not obtainable with conventional non-steroid antiinflammatory agents. Thus, it was found out that these effects are characteristic to the compound according to the present invention.

### EFFICACY AND PHARMACOLOGY TEST EXAMPLE 5

### (Effect 1 as interferon enhancer)

### Effect of the combined use of interferon-α (IFN-α) with the invention compound (SK-818) on mouse hepatitis virus (MHV):

### (1) Procedure

ICR mice were divided into groups each having 10 animals. To these mice, mouse IFN-α and SK-818 were respectively administered intraperitoneally and orally once a day for 3 days consecutively. Immediately before the administration on the day 2, these animals were intraperitoneally inoculated with 2LD₅₀ of MHV Friend strain. Then, the animals were observed 14 days thereafter and the survival ratio was determined.

### (2) Results and Discussion

Table 7 shows the results. The administration of 4 × 10⁴ IU/kg of IFN-α alone significantly prolongs the average survival period. The combined use of SK-818 with 4 × 10⁴ IU/kg of IFN-α significantly prolongs the survival period depending on dose of SK-818.

**TABLE 7**

| Dose | Mean survival period (days) |
|---|---|
| Control | 2.7 ± 0.2 |
| IFN-α (4 × 10⁴ IU/kg) | 4.2 ± 0.4 * |
| IFN-α (4 × 10⁴ IU/kg) + SK-818 0.5 mg/kg | 5.4 ± 0.4 * |
| IFN-α (4 × 10⁴ IU/kg) + SK-818 1.0 mg/kg | 7.0 ± 0.5 ** (*) |
| IFN-α (4 x 10⁴ IU/kg) + SK-818 2.0 mg/kg | 8.1 ± 0.4 ** (*) |
| IFN-α (4 × 10⁴ IU/kg) + SK-818 5.0 mg/kg | 10.3 ± 0.8 ** (**) |
| IFN-α (4 × 10⁴ IU/kg) + SK-818 10.0 mg/kg | 11.1 ± 0.6 ** (**) |
| Significant difference from the control group in Mann-Whitney's U test: * p < 0.05, ** p < 0.01. ( ): Significant difference from the INF-administered group in Mann-Whiteny's U test: (*) p < 0.05, (**) p < 0.01. | |

### EFFICACY AND PHARMACOLOGY TEST EXAMPLE 6

### (Effect 2 as interferon enhancer)

### Effect of the combined use of interferon-α (IFN-α) with SK-818 on mice infected with herpes simplex virus-1 (HSV-1):

### (1) Procedure

BALB/c mice were divided into groups each having 10 animals and infected with 10LD₅₀ of HSV-1 MIYAMA strain. IFN-α was intraperitoneally administered twice, i.e., the day before the inoculation with HSV-1 and immediately after the inoculation consecutively. SK-818 was orally administered consecutively for 5 days from the day before the inoculation to the day 4 after the inoculation. Then, the condition of animals were observed 20 days after the infection with HSV-1 and the survival ratio was determined.

### (2) Results and Discussion

Table 8 shows the results. The administration of 4 × 10⁴ IU/kg of IFN-α alone achieves no significant effect. However, the combined use of SK-818 with 4 × 10⁴ IU/kg of IFN-α significantly prolongs the survival period depending on dose.

**TABLE 8**

| Dose | Mean survival period (days) |
|---|---|
| Control | 9.7 ± 1.6 |
| IFN-α (4 × 10⁴ IU/kg) | 12.2 ± 1.6 |
| IFN-α (4 × 10⁴ IU/kg) + SK-818 0.5 mg/kg | 12.3 ± 1.6 |
| IFN-α (4 × 10⁴ IU/kg) + SK-818 1.0 mg/kg | 15.9 ± 1.7 * |
| IFN-α (4 × 10⁴ IU/kg) + SK-818 2.0 mg/kg | 16.5 ± 1.6 ** |
| IFN-α (4 × 10⁴ IU/kg) + SK-818 5.0 mg/kg | 17.5 ± 1.3 ** (*) |
| IFN-α (4 × 10⁴ IU/kg) + SK-818 10.0 mg/kg | 17.9 ± 1.2 ** (*) |
| Significant difference from the control group in Mann-Whitney's U test: * p < 0.05, ** p < 0.01. ( ): Significant difference from the INF-administered group in Mann-Whiteny's U test: (*) p < 0.05. | |

The results obtained in the above Efficacy/Pharmacology Test Examples 5 and 6 indicate that the compound of the present invention (SK-818) enhances the effects of interferon both on a DNA virus (MHV) and an RNA virus *in vivo*.

### EFFICACY AND PHARMACOLOGY TEST EXAMPLE 7

### (Preventive and treating effect on the onset of AIDS)

### Clinical test:

### a) Purpose

To examine the preventive effect of the compound of the present invention on the onset of AIDS.

### b) Procedure

The compound of the present invention has been administered to 20 patients infected with AIDS virus at a dose of 10 mg after each meal thrice a day for 1 year by now. The onset of AIDS symptoms is evaluated by the physician in charge and the data are collected.

### c) Results and Discussion

No symptom of AIDS has occurred up to now, which indicates that the compound of the present invention has a suppressive effect on the onset of AIDS. However, it is required to consecutively observe the progress over several years. The results will be successively reported in greater detail by a research group of the Ministry of Health and Welfare, Japan.

### EFFICACY AND PHARMACOLOGY TEST EXAMPLE 8

### (Maillard reaction-inhibiting effect)

### Inhibitory effect of 3-oxygermylpropionic acid according to the present invention on Maillard reaction between protein and sugar:

Bovine serum albumin (BSA) or lysozyme (LYZ), i.e. a protein, was dissolved in a 0.5 M phosphate buffer solution (pH 7.4) at 10 mg/ml. Further, glucose or fructose was added to the resulting solution so as to give a final concentration of 400 mM. To the solution thus obtained, 3-oxygermylpropionic acid was added to give a concentration of 100 µg/ml. As a comparative, aminoguanidine of a final concentration of 5 mM was employed. The mixture was incubated in the dark at 37°C and the amount of a fluorescent substance in the reaction product was measured after a definite period. The excitation wavelength was set to 350 nm while the measurement wavelength was set to 435 nm (in the case of glucose) or 428 nm (in the case of fructose). As a standard, quinine/0.1 NH₂SO₄ was used.

Table 9 shows the results. As indicated in Table 9, 3-oxygermylpropionic acid of the present invention exhibits an intense effect, i.e., being comparable to that of 5 mM aminoguanidine, of inhibiting Maillard reaction.

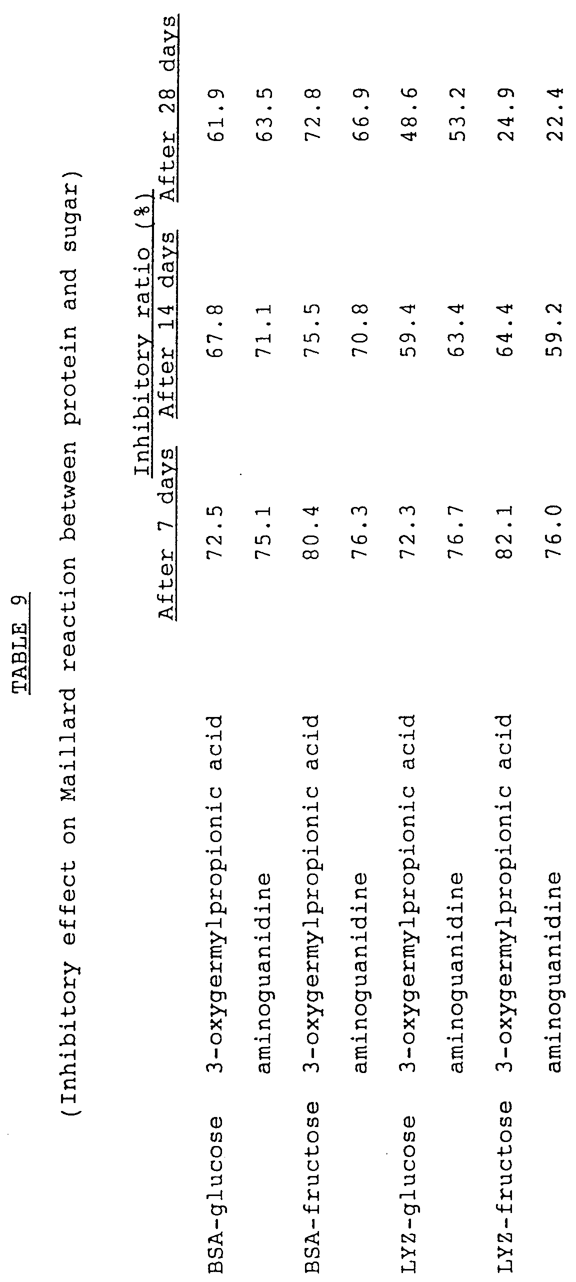

### EFFICACY AND PHARMACOLOGY TEST EXAMPLE 9

### (Maillard reaction-inhibiting effect)

### Inhibitory effect of 3-oxygermylpropionic acid according to the present invention on tissue Maillard reaction in streptothricin (ST)-induced diabetic mice:

To SD rats weighing about 200 g, ST was intravenously injected at a dose of 50 mg/kg to thereby induce the onset of diabetes. Then 3-oxygermylpropionic acid according to the present invention was orally administered to the animals at doses of 1, 5, 25 and 125 mg/kg consecutively. As a positive comparative, aminoguanidine was orally administered at a dose of 25 mg/kg consecutively. After 24 weeks, the amounts of the Maillard reaction product in the collagenous tissues in the ischiadic nerve, the retina, the abdominal aorta and the renal cortex were measured by the collagenase digestion method [Monnier V.M. et al., Proc. Natl. Acad. Sci. USA, 81, 583 (1984)].

As a result, it is found out that 3-oxygermylpropionic acid of the present invention suppresses the production of the Maillard reaction product in each collagen tissue and, in particular, exhibits significant effects at doses of 5, 25 and 125 mg/kg. Also, the consecutive administration of 25 mg/kg of aminoguanidine shows a significant suppressing effect. Fig. 10 shows the results of the measurement of the Maillard reaction product in the ischiadic nerve.

The present invention provides a pharmaceutical composition comprising an eight-structural organic germanium compound, which has a minimum constitutional unit of (O_{1/2})₃GeCH₂CH₂COOH and an empirical formula of C₆H₁₀Ge₂O₇, as the major ingredient. As the results of pharmacological tests, it was found out that this compound is useful in ameliorating symptoms of immune diseases, enhancing the effect of interferon which is efficacious against viral infection, inhibiting Maillard reaction and preventing and treating diabetes and concurrent diseases thereof caused by Maillard reaction. Furthermore, it is clinically efficacious in preventing and treating hepatic disorders such as Type B hepatitis and Type C hepatitis, wart and AIDS induced by viral diseases.

While the invention has been described in detail and with reference to specific examples thereof, it will be apparent to one skilled in the art that various changes and modifications can be made therein without departing from the spirit and scope thereof.

## Claims

1. An eight-structural polymer of 3-oxygermylpropionic acid having a minimum constitutional unit of (O_{1/2})₃GeCH₂CH₂COOH, an empirical formula of C₆H₁₀Ge₂O₇, and the following stereostructure: 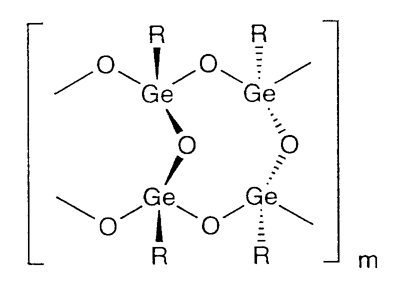 wherein R represents -CH₂CH₂COOH, and m is a weight average polymerization degree calculated on the basis of the weight average molecular weight of propagermanium propyl ester and is 137 ± 84 (137 on average with a standard deviation of ± 3σ).

2. The eight-structural polymer of 3-oxygernylpropionic acid as claimed in claim 1, which has a melting point of about 230°C (decomp.).

3. A pharmaceutical composition comprising the eight-structural polymer of 3-oxygermylpropionic acid of claim 1.

4. The pharmaceutical composition as claimed in claim 3, which further comprises a carrier.

5. The pharmaceutical composition as claimed in claim 3 for preventing, ameliorating and treating a symptom of immune disease caused by a virus.

6. The pharmaceutical composition as claimed in claim 5 for the treatment of hepatic disorders such as Type B hepatitis and Type C hepatitis, wart and AIDS.

7. The pharmaceutical composition as claimed in claim 3 for use as an interferon enhancer.

8. The pharmaceutical composition as claimed in claim 3 for use as a Maillard reaction inhibitor.

9. The pharmaceutical composition as claimed in claim 3 for use as an adjuvant for vaccines.

10. The pharmaceutical composition as claimed in claim 3, wherein the composition further contains an ingredient which has a therapeutic effect for a disease.

11. The pharmaceutical composition as claimed in claim 9, wherein the ingredient is an agent selected from antiviral agents, antiallergic agents and anticancerous agents.

12. Use of the eight-structural polymer of 3-oxygermylpropionic acid of claim 1 for the manufacture of a medicament for the treatment of a symptom of an immune disease.

13. The use of the eight-structural polymer of 3-oxygermylpropionic acid as claimed in claim 12, wherein the symptom of immune disease is hepatic disorders such as Type B hepatitis and Type C hepatitis, wart and AIDS which are caused by virus.

14. Use of the eight-structural polymer of 3-oxygermylpropionic acid of claim 1 for the manufacture of an interferon enhancer.

15. Use of the eight-structural polymer of 3-oxygermylpropionic acid of claim 1 for the manufacture of a Maillard reaction inhibitor.

16. Use of the eight-structural polymer of 3-oxygermylpropionic acid of claim 1 for the manufacture of a vaccine as a adjuvant.
